# EUROPEAN PATENT SPECIFICATION

(11) **EP 4 197 810 B1**
(45) Date of publication and mention of the grant of the patent: **19.11.2025**
(21) Application number: 22213051.0
(22) Date of filing: 13.12.2022
(51) Int. Cl.: B32B 1/08, B32B 3/08, B32B 3/18, B32B 7/05, B32B 5/02, B32B 25/10, B60C 7/14, D03D 11/02, B32B 3/12, B32B 3/20, B32B 25/04

(54) **NON-PNEUMATIC TIRE WITH IMPROVED SHEAR BAND**
LUFTLOSER REIFEN MIT VERBESSERTEM SCHERBAND
PNEU NON PNEUMATIQUE AVEC BANDE DE CISAILLEMENT AMÉLIORÉE

(30) Priority: 17.12.2021 US 202163265615 P; 10.10.2022 US 202218045225
(43) Date of publication of application: 21.06.2023
(73) Proprietor: The Goodyear Tire & Rubber Company, Akron, OH 44316 (US)
(72) Inventor: SPORTELLI, Francesco, 3249 Bettembourg (LU)
(74) Representative: Kutsch, Bernd

(56) References cited:
- EP-A1- 3 231 637
- EP-A1- 3 238 957
- EP-A1- 3 888 942

## Description

### Field of the Invention

The present invention relates generally to vehicle tires and non-pneumatic tires, and more particularly, to an improved shear band for a non-pneumatic tire.

### Background of the Invention

The pneumatic tire has been the solution of choice for vehicular mobility for over a century. The pneumatic tire is a tensile structure. The pneumatic tire has at least four characteristics that make the pneumatic tire so dominant today. Pneumatic tires are efficient at carrying loads, because all of the tire structure is involved in carrying the load. Pneumatic tires are also desirable because they have low contact pressure, resulting in lower wear on roads due to the distribution of the load of the vehicle. Pneumatic tires also have low stiffness, which ensures a comfortable ride in a vehicle. The primary drawback to a pneumatic tire is that it requires compressed gasses. A conventional pneumatic tire is rendered useless after a complete loss of inflation pressure.

A tire designed to operate without inflation pressure may eliminate many of the problems and compromises associated with a pneumatic tire. Neither pressure maintenance nor pressure monitoring is required. Structurally supported tires such as solid tires or other elastomeric structures to date have not provided the levels of performance required from a conventional pneumatic tire. A structurally supported tire solution that delivers pneumatic tire-like performance would be a desirous improvement.

Non pneumatic tires are typically defined by their load carrying efficiency. "Bottom loaders" are essentially rigid structures that carry a majority of the load in the portion of the structure below the hub. "Top loaders" are designed so that all of the structure is involved in carrying the load. Top loaders thus have a higher load carrying efficiency than bottom loaders, allowing a design that has less mass.

The purpose of the shear band is to transfer the load from contact with the ground through tension in the spokes or connecting web to the hub, creating a top loading structure. When the shear band deforms, its preferred form of deformation is shear over bending. The shear mode of deformation occurs because of the inextensible membranes located on the outer portions of the shear band. Prior art non-pneumatic tire typically have a shear band made from rubber materials sandwiched between at least two layers of inextensible belts or membranes. The disadvantage to this type of construction is that the use of rubber significantly increases the cost and weight of the non-pneumatic tire. Another disadvantage to the use of rubber is that is generates heat, particularly in the shear band. Furthermore, the rubber in the shear band needs to be soft in shear, which makes it difficult to find the desired compound.

Thus, an improved non-pneumatic tire is desired that has all the features of the pneumatic tires without the drawback of the need for air inflation is desired.

EP 3 231 637 A1 describes a tire in accordance with the preamble of claim 1. Similar tires are also known from EP 3 238 957 A1 and EP 3 888 942 A1.

### Summary of the Invention

The invention relates to a non-pneumatic tire in accordance with claim 1. Dependent claims refer to preferred embodiments of the invention.

### Brief Description of the Drawings

The present invention will be better understood through reference to the following description and the appended drawings, in which:
FIG. 1 is a perspective view of a first embodiment of a non-pneumatic tire of the present invention;
FIG. 2 is a cross-sectional view of a first embodiment of a shear band and outer tread;
FIG. 3A is a top view of the three-dimensional fabric structure of FIG. 2;
FIG. 3B is a cross-sectional view of the three-dimensional fabric structure of FIG. 2: and
FIG. 3C illustrates various possible configurations of the cross-members.

### Definitions

"Auxetic material" means a material that has a negative Poisson's ratio.

"Cord" means the twisted fiber or filament of, for instance, polyester, rayon, nylon or steel, which form a reinforcement cord.

"Equatorial Plane" means a plane perpendicular to the axis of rotation of the tire passing through the centerline of the tire.

"Fabric" means a network of cords which extend in in multiple directions.

"Free area" is a measure of the openness of the fabric per DIN EN 14971 and is the amount of area in the fabric plane that is not covered by yarn. It is a visual measurement of the tightness of the fabric and is determined by taking an electronic image of the light from a light table passing through a 15.24 cm by 15.24 cm square sample of the fabric and comparing the intensity of the measured light to the intensity of the white pixels.

"Inextensible" means that a given layer has an extensional stiffness greater than 172.4 MPa (25 Ksi).

"Knitted" is meant to include a structure producible by interlocking a series of loops of one or more yarns by means of needles or wires, such as warp knits and weft knits.

"Three-dimensional spacer structure" means a three-dimensional structure composed from two outer layers of fabric, each outer layer of fabric having reinforcement members (such as yarns, filaments or fibers) which extend in a first and second direction, wherein the two outer layers are connected together by reinforcement members (yarns, filaments or fibers) or other knitted layers that extend in a defined third direction. An "open" three-dimensional spacer structure comprises individual pile fibers or reinforcements that connect the first and second layer of fabric. A "closed" three-dimensional structure utilizes fabric piles that connect the first and second layers.

"Yarn" means a continuous strand of textile fibers or filaments. A monofilament yarn has only a single filament with or without twist.

"Woven" is meant to include a structure produced by multiple yarns crossing each other at right angles to form the grain, like a basket.

### Detailed Description of Preferred Embodiments of the Invention

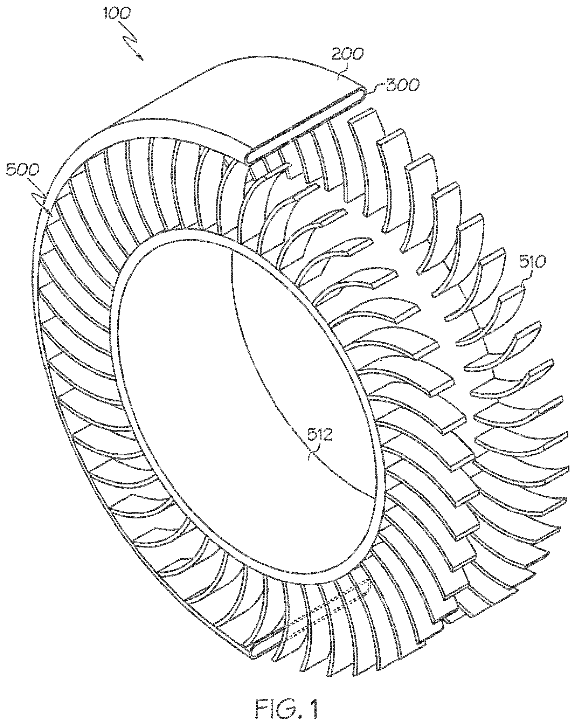

A first embodiment of a non-pneumatic tire 100 of the present invention is shown in Figure 1. The tire of the present invention includes a radially outer ground engaging tread 200, a shear band 300, and a connecting web 500. The tire tread 200 may include elements such as ribs, blocks, lugs, grooves, and sipes as desired to improve the performance of the tire in various conditions. The connecting web 500 is mounted on a hub 512 and may have different designs, such as spokes or an elastomeric web. The non-pneumatic tire of the present invention is preferably designed to be a top loading structure, so that the shear band 300 and the connecting web 500 efficiently carry the load. The shear band 300 and the connecting web are designed so that the stiffness of the shear band is directly related to the spring rate of the tire. The connecting web is designed to be a stiff structure when in tension that buckles or deforms in the tire footprint and does not compress or carry a compressive load. This allows the rest of the connecting web not in the footprint area the ability to carry the load, resulting in a very load efficient structure. It is desired to allow the shearband to bend to overcome road obstacles. The approximate load distribution is preferably such that approximately 90-100% of the load is carried by the shear band and the upper portion of the connecting web, so that the lower portion of the connecting web carry virtually zero of the load and preferably less than 10%.

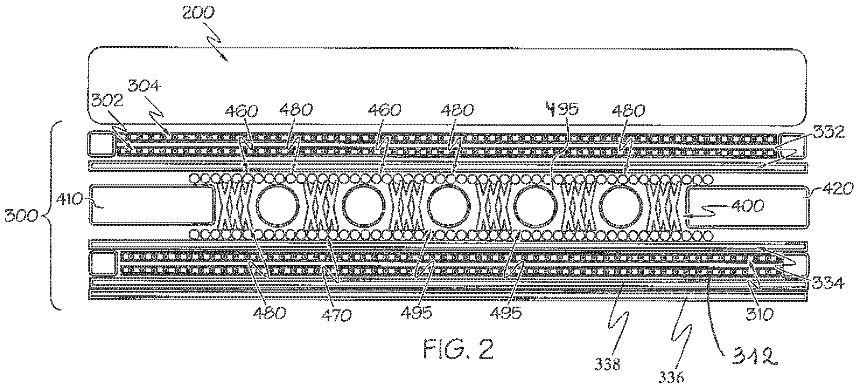

The shear band 300 is preferably an annular structure that is located radially inward of the tire tread 200. The shear band includes a three-dimensional spacer structure 400, shown in Fig. 2. The three-dimensional spacer structure 400 is preferably positioned between a first and second layer of gum rubber 332, 334 (not shown to scale). The gum rubber 332, 334 may be as thick as desired.

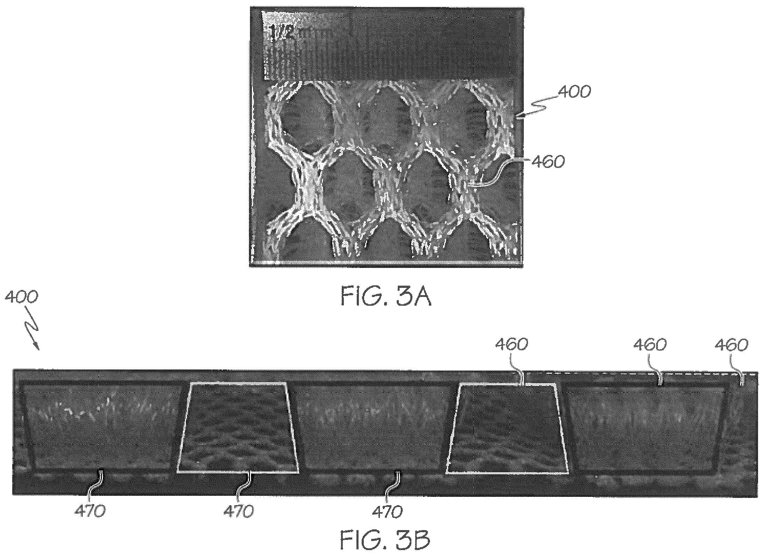

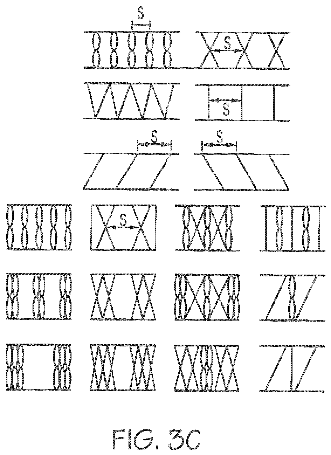

As shown in Fig. 2, the three-dimensional spacer structure 400 is a type of structure that has a first and second layer of fabric 460, 470, wherein each layer of fabric is formed from or comprises reinforcement members that may be knitted, woven, nonwoven, interlaced or non-interlaced. The reinforcement members are preferably multifilament and formed of polyester, nylon, aramid, or hybrid cord of polyester, nylon or aramid. The first and second layers 460, 470 of fabric are preferably oriented parallel with respect to each other and are interconnected with each other by a plurality of pile connecting members 480 that extend in a third or pile dimension. As shown in Fig. 3C, the pile connecting members 480 preferably form a straight connection of the first and second layers 460, 470 that may extend in the radial direction, or be angled with the radial direction. The pile connecting members 480 may form an X shape, or letter 8 shape or combinations thereof. The pile connecting members 480 are preferably monofilaments made of polyester material.

The pile connecting members are grouped together in pile sections, wherein each pile section has a channel section 495 located on either side of the pile section. Each channel section 495 is a void that may remain a void or be filled with foam or other filler material. Thus, the pile sections and channel sections alternate with each other across the axial width of the tire 100. Each channel and pile section extends continuously in the circumferential direction. The axial width of each channel section 495 and each pile section preferably ranges from 3 mm to 8 mm. For a given cross-section, it is preferred that there be at least 50 pile connecting members in each pile section.

The perpendicular distance between the connecting layers 460, 470 or Z direction dimension of the three-dimensional structure is in the range of from 2 millimeters to 25 millimeters, more preferably 3 to 10 millimeters, and even more preferably in the range of 5 -10 mm.

The three-dimensional fabric structure 400 is preferably oriented in the shear band 300 so that the first and second layers 460, 470 are aligned in parallel relation and extend across the axial direction as well as extending in the circumferential direction. The pile reinforcement members 480 of three-dimensional fabric structure 400 are preferably aligned with the radial direction of the non-pneumatic tire 100.

Preferably, all of the channel sections 495 are filled with the filler material. The filler material is preferably an open or closed cell foam, polyurethane foam, EVA, a sealant or other soft material. The filler material preferably has a compressive modulus between 0.1 MPa to 200 MPa, more preferably 15 MPA to 80 MPA.

Preferably, the three-dimensional fabric structure 400 is treated with an RFL adhesive, which is a well-known resorcinol-formaldehyde resin/butadiene-styrene-vinyl pyridine terpolymer latex, or a blend thereof with a butadiene/styrene rubber latex, that is used in the tire industry for application to fabrics, fibers and textile cords for aiding in their adherence to rubber components (for example, see U.S. Patent No. 4,356,219.) The reinforcement members may be single end dipped members (i.e., a single reinforcement member is dipped in RFL adhesive or adhesion promoter.)

The three-dimensional fabric structure 400 preferably has a density in the range of 700-1000 gram/m² as measured by DIN 12127.

The compression stiffness of the three-dimensional fabric structure 400 preferably ranges from 50 to 600 kPa as measured by DIN/ISO 33861, and more preferably range from 100 to 250 kPa.

As shown in Fig. 2, the shear band additionally includes a first membrane layer 302. The first membrane layer 302 is preferably inextensible, and is located radially outward of the three-dimensional spacer structure 400. The shear band further comprises a second membrane layer 304 that is arranged in parallel with the first membrane layer 302 and is the radially outermost membrane layer. The first and second membrane layers 302, 304 preferably each have reinforcement members or cords that are oriented at an angle in the range of 20 to 30 degrees relative to the tire equatorial plane. Preferably, the angle of the reinforcement cords of the first layer 302 is in the opposite direction of the angle of the reinforcement cords in the second layer 304. It is additionally preferred that the reinforcement member or cords are inextensible.

As shown in Fig. 2, the shear band 300 preferably additionally includes a third membrane layer 310. The third membrane layer 310 is preferably inextensible, and preferably located radially inward of the three-dimensional spacer structure 400. The shear band may further comprise an optional fourth membrane layer 312 and is the radially innermost membrane layer. The third and fourth membrane layers 310, 312 preferably each have reinforcement members or cords that are oriented at an angle in the range of 0 to 5 degrees relative to the tire equatorial plane. The third and fourth membrane layers 310, 312 may be formed by spirally winding a continuous reinforcement cord. It is additionally preferred that the reinforcement member or cords are inextensible.

Preferably, a layer of gum rubber 332, 334 separates the three-dimensional spacer structure 400 from each respective membrane layer 302, 310. There may optionally be additional layers of gum rubber 336, 338 which separate the shear band 300 and tread ring 200 from the spoke structure 510.

Located on each axially outer end of the three-dimensional fabric structure 400 is a first foam member 410 and a second foam member 420. The laterally outer foam members 410, 420 provide support to the three-dimensional fabric structure 400.

Any of the above described embodiments of the three-dimensional fabric structure 400 preferably has a density in the range of 700-1000 gram/m² as measured by DIN 12127.

The compression stiffness of any of the three-dimensional fabric structure 400 preferably ranges from 50 to 600 kPa as measured by DIN/ISO 33861, and more preferably range from 100 to 250 kPa.

## Claims

1. A non-pneumatic tire having an outer tread ring (200) and a shear band (300), wherein the shear band (300) includes a three-dimensional spacer structure (400) comprising a first and second layer of fabric (460, 470), wherein each of said first and second layer of fabric (460, 470) is connected to the respective other by a plurality of pile sections spaced apart from each other, wherein the three-dimensional spacer structure (400) further includes a plurality of channel sections (495) located between the pile sections, wherein each pile section (485) has a plurality of pile connecting members (480), and wherein the shear band (300) further includes a first and a second membrane layer (302, 304) having reinforcement cords, **characterized in that** the first and second membrane layer (302, 304) are located radially outward of the three-dimensional spacer structure (400).

2. The non-pneumatic tire of claim 1 wherein the pile connecting members (480) comprise monofilaments and/or wherein the first and second layer of fabric (460, 470) are formed of reinforcement members comprising polyfilaments.

3. The nonpneumatic tire of claim 1 or 2 wherein each channel section (495) is filled with a filler material, preferably a foam or an expandable foam.

4. The non-pneumatic tire of claim 2 wherein the filler material is an open cell foam or a closed cell foam or is EVA.

5. The non-pneumatic tire of claim 3 or 4 wherein the filler material is a sealant or other soft material.

6. The non-pneumatic tire of claim 3, 4 or 5 wherein the filler material has a compressive modulus between in a range of from 0.1 MPA to 200 MPa, preferably 15 MPa to 80 MPa.

7. The non-pneumatic tire of at least one of the previous claims further including a third and a fourth membrane layer (310, 312) having reinforcement cords that are preferably oriented at an angle in the range of 0 to 5 degrees relative to the tire equatorial plane.

8. The non-pneumatic tire of claim 7 wherein the third and fourth membrane layer (310, 312) are located radially inward of the three-dimensional spacer structure (400).

9. The non-pneumatic tire of at least one of the previous claims wherein the first and second fabric layers (460, 470) are separated by a distance in the range of from 2 to 15 millimeters, more preferably 3 to 8 mm or 5 to 10 mm.

10. The non-pneumatic tire of at least one of the previous claims wherein the pile connecting members (480) are oriented perpendicular to the first and second layer of fabric (460, 470).

11. The non-pneumatic tire of at least one of the previous claims wherein the lateral ends of the three-dimensional spacer structure (400) comprise a foam member (410, 420).

12. The non-pneumatic tire of at least one of the previous claims wherein the three-dimensional spacer structure (400) has an axial width, and wherein the pile connecting members (480) do not extend the full axial width of the three-dimensional spacer structure (400).

13. The non-pneumatic tire of at least one of the previous claims wherein three-dimensional spacer structure (400) is located between a first and second layer of gum rubber (332, 334); and/or wherein there are additional layers of gum rubber (336, 338) which separate the shear band (300) from a spoke structure (510) of the non-pneumatic tire (100).

## Patentansprüche

1. Nicht-Luftreifen, der einen Außenring (200) in der Form einer Lauffläche, sowie ein Scherband (300) besitzt; wobei das Scherband (300) eine dreidimensionale Struktur (400) in der Form eines Abstandshalters enthält, die eine erste und eine zweite Gewebelage (460, 470) umfasst; wobei jede der ersten und zweiten oben genannten Gewebelagen (460, 470) mit der jeweiligen anderen Lage über eine Anzahl von Florabschnitten verbunden ist, die voneinander getrennt sind; wobei die dreidimensionale Struktur (400) in der Form eines Abstandshalters ferner eine Anzahl von Abschnitten in der Form von Kanälen (495) umfasst, die zwischen den Florabschnitten angebracht sind; wobei jeder Florabschnitt (485) eine Anzahl von Elementen (480) besitzt, die die Flore verbinden; und wobei das Scherband (300) ferner eine erste und eine zweite Lage (302, 304) in der Form von Membranen umfasst, die Verstärkungskorde besitzen; **dadurch gekennzeichnet, dass** die erste und die zweite Lage (302, 304) in der Form von Membranen in der radialen Richtung außerhalb der dreidimensionalen Struktur (400) in der Form eines Abstandshalters angebracht sind.

2. Nicht-Luftreifen nach Anspruch 1, wobei die die Flore verbindenden Elemente (480) Monofilamente umfassen; und/oder wobei die erste und die zweite Gewebelage (460, 470) aus Verstärkungselementen hergestellt sind, die Polyfilamente umfassen.

3. Nicht-Luftreifen nach Anspruch 1 oder 2, wobei jeder Abschnitt (495) in der Form eines Kanals mit einem Füllmaterial, vorzugsweise einem Schaum oder einem expandierbaren Schaum, gefüllt ist.

4. Nicht-Luftreifen nach Anspruch 2, wobei das Füllmaterial einen Schaum vom offenzelligen Typ oder einen Schaum vom geschlossenzelligen Typ darstellt oder EVA darstellt.

5. Nicht-Luftreifen nach Anspruch 3 oder 4, wobei das Füllmaterial ein Dichtungsmaterial oder ein anderes flexibles Material darstellt.

6. Nicht-Luftreifen nach Anspruch 3, 4 oder 5, wobei der Füllstoff einen Druckelastizitätsmodul besitzt, der in dem Bereich von 0,1 MPa bis 200 MPa, vorzugsweise von 15 MPa bis 80 MPa, liegt.

7. Nicht-Luftreifen nach mindestens einem der vorhergehenden Ansprüche, der ferner eine dritte und eine vierte Lage (310, 312) in der Form von Verstärkungskorde enthaltenden Membranen, die vorzugsweise unter Bildung eines Winkels in dem Bereich von 0 bis 5 Grad in Bezug auf die Äquatorialebene des Luftreifens orientiert sind.

8. Nicht-Luftreifen nach mindestens einem der vorhergehenden Ansprüche, wobei die dritte und die vierte Lage (310, 312) in der Form von Membranen in der radialen Richtung innerhalb der dreidimensionalen Struktur (400) in der Form eines Abstandshalters angebracht sind.

9. Nicht-Luftreifen nach mindestens einem der vorhergehenden Ansprüche, wobei die erste und die zweite Gewebelage (460, 470) durch einen Abstand getrennt sind, der in dem Bereich von 2 bis 15 mm, mehr bevorzugt von 3 bis 8 mm oder von 5 bis 10 mm, liegt.

10. Nicht-Luftreifen nach mindestens einem der vorhergehenden Ansprüche, wobei die die Flore verbindenden Elemente (480) in der Richtung senkrecht zu der ersten und der zweiten Gewebelage (460, 470) ausgerichtet sind.

11. Nicht-Luftreifen nach mindestens einem der vorhergehenden Ansprüche, wobei die seitlichen Enden der dreidimensionalen Struktur (400) in der Form eines Abstandshalters ein Schaumstoffelement (410, 420) umfassen.

12. Nicht-Luftreifen nach mindestens einem der vorhergehenden Ansprüche, wobei die dreidimensionale Struktur (400) in der Form eines Abstandshalters eine axiale Breite besitzt; und wobei die Elemente (480), die die Flore verbinden, sich nicht über die gesamte axiale Breite der dreidimensionalen Struktur (400) in der Form eines Abstandshalters erstrecken.

13. Nicht-Luftreifen nach mindestens einem der vorhergehenden Ansprüche, wobei die dreidimensionale Struktur (400) in der Form eines Abstandshalters zwischen einer ersten und einer zweiten Lage aus Gummi-Kautschuk (332, 334) angebracht ist; und/oder wobei zusätzliche Lagen aus Gummi-Kautschuk (336, 338) vorgesehen sind, die das Scherband (300) von einer Struktur (510) in der Form von Speichen, des Nicht-Luftreifens (100) trennen.

## Revendications

1. Bandage non pneumatique qui possède un anneau externe (200) faisant office de bande de roulement, ainsi qu'une bande de cisaillement (300) ; dans lequel la bande de cisaillement (300) englobe une structure en trois dimensions (400) sous la forme d'une entretoise, qui comprend une première et une deuxième couche de tissu (460, 470) ; dans lequel chaque couche, parmi lesdites première et deuxième couche de tissu (460, 470), est reliée à l'autre couche respective par l'intermédiaire d'un certain nombre de tronçons de poils, qui sont espacés les uns des autres ; dans lequel la structure en trois dimensions (400) sous la forme d'une entretoise englobe en outre un certain nombre de tronçons sous la forme de canaux (495) qui sont disposés entre les tronçons de poils ; dans lequel chaque tronçon de poils (485) possède un certain nombre d'éléments (480) qui relient les poils ; et dans lequel la bande de cisaillement (300) englobe, en outre, une première et une deuxième couche (302, 304) sous la forme de membranes, qui possèdent des câblés de renforcement ; **caractérisé en ce que** la première et la deuxième couche (302, 304) sous la forme de membranes sont disposées, dans la direction radiale, à l'extérieur de la structure en trois dimensions (400) sous la forme d'une entretoise.

2. Bandage non pneumatique selon la revendication 1, dans lequel les éléments (480) qui relient les poils comprennent des monofilaments ; et/ou dans lequel la première et la deuxième couche de tissu (460, 470) sont réalisées à partir d'éléments de renforcement qui comprennent des polyfilaments.

3. Bandage non pneumatique selon la revendication 1 ou 2, dans lequel chaque tronçon (495) sous la forme de canal est rempli avec une matière de remplissage, de préférence une mousse ou une mousse expansible.

4. Bandage non pneumatique selon la revendication 2, dans lequel la matière de remplissage représente une mousse du type à alvéoles ouvertes ou une mousse du type à alvéoles fermées ou représente du EVA.

5. Bandage non pneumatique selon la revendication 3 ou 4, dans lequel la matière de remplissage représente une matière d'étanchéité ou une autre matière souple.

6. Bandage non pneumatique selon la revendication 3, 4 ou 5, dans lequel la matière de remplissage possède un module d'élasticité à la compression qui se situe dans une plage allant de 0,1 MPa à 200 MPa, de préférence de 15 MPa à 80 MPa.

7. Bandage non pneumatique selon au moins une des revendications précédentes, qui englobe en outre une troisième et une quatrième couche (310, 312) sous la forme de membranes, qui possèdent des câblés de renforcement qui sont de préférence orientés en formant un angle dans la plage de 0 à 5 degrés par rapport au plan équatorial du bandage pneumatique.

8. Bandage non pneumatique selon la revendication 7, dans lequel la troisième et la quatrième couche (310, 312) sous la forme de membranes sont disposées, dans la direction radiale, à l'intérieur de la structure en trois dimensions (400) sous la forme d'une entretoise.

9. Bandage non pneumatique selon au moins une des revendications précédentes, dans lequel la première et la deuxième couche de tissu (460, 470) sont séparées par une distance qui se situe dans la plage allant de 2 à 15 mm, de manière plus préférée de 3 à 8 mm ou de 5 à 10 mm.

10. Bandage non pneumatique selon au moins une des revendications précédentes, dans lequel les éléments qui relient les poils (480) sont orientés dans la direction perpendiculaire par rapport à la première et la deuxième couche de tissu (460, 470).

11. Bandage non pneumatique selon au moins une des revendications précédentes, dans lequel les extrémités latérales de la structure en trois dimensions (400) sous la forme d'une entretoise comprennent un élément en mousse (410, 420).

12. Bandage non pneumatique selon au moins une des revendications précédentes, dans lequel la structure en trois dimensions (400) sous la forme d'une entretoise possède une largeur axiale ; et dans lequel les éléments (480) qui relient les poils ne s'étendent pas sur la totalité de la largeur axiale de la structure en trois dimensions (400) sous la forme d'une entretoise.

13. Bandage non pneumatique selon au moins une des revendications précédentes, dans lequel la structure en trois dimensions (400) sous la forme d'une entretoise est disposée entre une première et une deuxième couche de caoutchouc-gomme (332, 334) ; et/ou dans lequel on prévoit des couches supplémentaires de caoutchouc-gomme (336, 338) qui séparent la bande de cisaillement (300) d'une structure (510) sous la forme de rayons, du bandage non pneumatique (100).
